# EUROPEAN PATENT SPECIFICATION

(11) **EP 3 807 088 B1**
(45) Date of publication and mention of the grant of the patent: **24.01.2024**
(21) Application number: 19819148.8
(22) Date of filing: 12.06.2019
(51) Int. Cl.: B32B 29/06, B32B 27/10, B32B 33/00, A47G 19/03, A47J 47/00, B65D 1/34, D21H 19/28, D21H 21/16, D21H 27/10

(54) **COATED PAPERBOARD AND A TRAY MADE THEREFROM**
BESCHICHTETE PAPPE UND DARAUS HERGESTELLTE SCHALE
CARTON REVÊTU ET PLATEAU FABRIQUÉ À PARTIR DE CELUI-CI

(30) Priority: 13.06.2018 US 201862684430 P; 23.10.2018 US 201862749202 P
(43) Date of publication of application: 21.04.2021
(73) Proprietor: WestRock MWV, LLC, Atlanta, GA 30328 (US)
(72) Inventor: STATELMAN, William, Richmond, Virginia 23225 (US); BINSHTOK, Ronald, Quinton, Virginia 23141 (US); MASSENZO, Trisha, Richmond, Virginia 23226 (US); LINVILL, Eric, 12573 Älvsjö (SE); RAMIREZ, Gabriela, Richmond, Virginia 23226 (US)
(74) Representative: Coulson, Elizabeth Eve
(86) International application number: PCT/US2019/036736
(87) International publication number: WO 2019/241363

(56) References cited:
- WO-A1-01/39968
- WO-A1-2012/150904
- CA-C- 2 391 458
- US-A- 3 188 215
- US-A- 4 313 899
- US-A1- 2008 193 687
- US-A1- 2010 215 855
- US-A1- 2014 370 273
- US-A1- 2015 014 328
- US-A1- 2015 101 747

## Description

### FIELD

The present application relates to the field of trays suitable for food packaging, particularly trays suitable for overwrapping of moist food products into a case-ready package for shelf storage.

### BACKGROUND

Various trays are known in the art for carrying moist food products, such as meat, poultry, seafood, and produce. It is desirable that such trays are water- and grease-resistant to effectively carry and store the food products.

Such trays may be overwrapped with a transparent wrapping material in order to display the food products carried by the tray and placed on display in retail markets. Thus, it is desirable that such trays handle the overwrapping process without failing.

Suitable trays include conventional trays formed from expanded polystyrene. However, there is a growing trend to limit the use of expanded polystyrene trays.

Accordingly, those skilled in the art continue with research and development in the field of trays suitable for food packaging.

### SUMMARY

In one embodiment, a coated paperboard includes: a single-ply paperboard substrate having a first major side and a second major side, and having an internal sizing agent incorporated therein; and a barrier coating on the first major side of the single-ply paperboard substrate, the barrier coating having an elastic modulus of at least 1.5 GPa.

In another embodiment, a paperboard tray includes: a coated paperboard in the form of a bottom wall, a side wall extending upwardly around the bottom wall, and a flange extending outwardly around the side wall. The coated paperboard includes: a single-ply paperboard substrate having a first major side and a second major side, the first major side corresponding to an upper side of the bottom wall; and a barrier coating on the first major side of the single-ply paperboard substrate, the barrier coating having an elastic modulus of at least 1.5 GPa.

In yet another embodiment, a method for manufacturing a paperboard tray includes: forming a paperboard blank from a coated paperboard, wherein the coated paperboard includes a single-ply paperboard substrate having a first major side and a second major side, and a barrier coating on the first major side of the single-ply paperboard substrate, the barrier coating having an elastic modulus of at least 1.5 GPa; and thermoforming the paperboard blank between a male die and a female die into a paperboard tray having a bottom wall, a side wall extending upwardly around the bottom wall, and a flange extending outwardly around the side wall, the first major side corresponding to an upper side of the bottom wall.

In yet another embodiment, a method for using a paperboard tray includes: positioning a food product within a paperboard tray, the paperboard tray comprising a coated paperboard in the form of a bottom wall, a side wall extending upwardly around the bottom wall, and a flange extending outwardly around the side wall, the coated paperboard including a single-ply paperboard substrate having a first major side and a second major side, the first major side corresponding to an upper side of the paperboard tray, and a barrier coating on the first major side of the single-ply paperboard substrate, the barrier coating having an elastic modulus of at least 1.5 GPa; and wrapping a film over the product and the paperboard tray.

Other embodiments of the disclosed coated paperboard, paperboard tray, method for manufacturing a paperboard tray, and method for using a paperboard tray will become apparent from the following detailed description, the accompanying drawings and the appended claims.

### BRIEF DESCRIPTION OF THE DRAWINGS

Fig. 1 is a cross-section of an exemplary coated paperboard according to an embodiment of the present description.
Fig. 2 is a roll of the coated paperboard of Fig. 1.
Fig. 3 is a paperboard blank of the coated paperboard of Fig. 1.
Fig. 4 is a perspective view of an exemplary paperboard tray according to an embodiment of the present description.
Fig. 5 is a top view of the paperboard tray of Fig. 4.
Fig. 6A is a side sectional view of the paperboard tray of Fig. 4 along section A-A.
Fig. 6B is a side sectional view of the paperboard tray of Fig. 4 according to an alternative variation along section A-A.
Fig. 7 is schematic representation of a male die and female die for thermoforming a coated paperboard into a paperboard tray.
Fig. 8A is a side sectional view of the paperboard tray of Fig. 6A in the wrapped configuration.
Fig. 8B is a side sectional view of the paperboard tray of Fig. 6B in the wrapped configuration.
Fig. 9 is a graph showing result of a finite element model for optimization of the flange of Fig. 6B during a simulation of an overwrapping process.

### DETAILED DESCRIPTION

By positioning a high stiffness barrier coating on a side of a single-ply paperboard substrate that corresponds to an inner side of a paperboard tray formed from the single-ply coated paperboard, the paperboard tray can be provided with water- and grease-resistance desirable for carrying moist food items, and the paperboard tray can be provided with sufficient rigidity to withstand using the paperboard tray in an overwrapping process. In an aspect, the present description enables providing a coated paperboard and paperboard tray that are compostable. In another aspect, the present description enables providing a coated paperboard and paperboard tray that are recyclable. In yet another aspect, the present description enables providing a coated paperboard and paperboard tray that are printable or capable of being dyed.

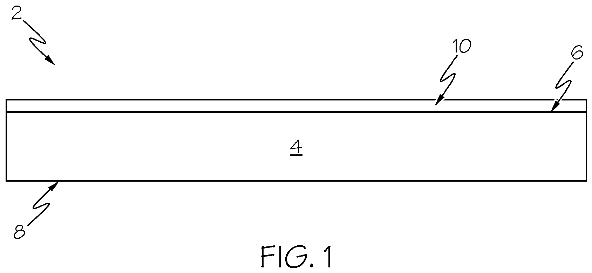

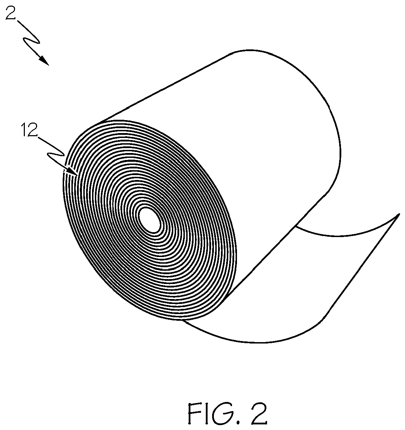

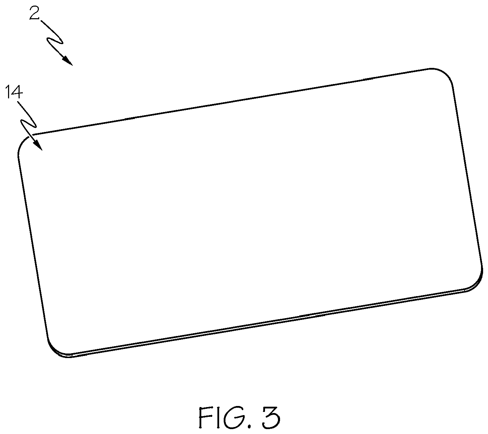

Fig. 1 is a cross-section of an exemplary coated paperboard 2. As shown, the coated paperboard 2 includes a single-ply paperboard substrate 4 having a first major side 6 and a second major side 8, and a barrier coating 10 on the first major side 6 of the single-ply paperboard substrate 4. As shown in Fig. 2, the coated paperboard 2 may take the form of a roll 12 of coated paperboard. As shown in Fig. 3, the coated paperboard 2 may take the form of a paperboard blank 14 of coated paperboard, which has been cut (e.g., die-cut) to the desired silhouette (e.g., a rounded rectangle is shown, but those skilled in the art will appreciate that various silhouettes may be used).

Referring to the coated paperboard 2 as illustrated in Fig. 1, the barrier coating 10 may be, for example, a single coating layer positioned directly on the first major side 6 of the single-ply paperboard substrate 4.

Referring to the coated paperboard 2 as illustrated in Fig. 1, the barrier coating 10 may define a first outermost surface of the coated paperboard 2 and the second major side 8 may define a second outermost surface of the coated paperboard 2. In an expression, the coated paperboard 2 may include a topcoat on the second major side 8. In another expression, the coated paperboard 2 may include a topcoat on the barrier coating 10.

In an aspect, the second major side 8 of the coated paperboard may be printable, or capable of being dyed, such as to permit display of graphics and/or text on the paperboard.

In an aspect, the coated paperboard 2 has an average caliper thickness of 0.010 inch (254 µm) or greater. In another aspect, the coated paperboard 2 has an average caliper thickness in the range of 0.010 inch to 0.035 inch (254 µm to 890 µm). In yet another aspect, the coated paperboard 2 has an average caliper thickness in the range of 0.016 inch to 0.026 inch (406 µm to 660 µm).

The single-ply paperboard substrate 4 may include any cellulosic material that is capable of being coated with the barrier coating layer. The single-ply paperboard substrate 4 may be bleached or unbleached. Appropriate single-ply paperboard substrates 4 include corrugating medium, linerboard, solid bleached sulfate (SBS), folding boxboard (FBB), and coated unbleached kraft (CUK). In a specific expression, the single-ply paperboard substrate 4 is solid bleached sulfate.

In an aspect, the single-ply paperboard substrate 4 has an average caliper thickness of 0.010 inch (254 µm) or greater. In another aspect, the single-ply paperboard substrate 4 has an average caliper thickness in the range of 0.010 inch to 0.035 inch (254 µm to 890 µm). In yet another aspect, the single-ply paperboard substrate 4 has an average caliper thickness in the range of 0.016 inch to 0.024 inch (16 point to 24 point; 406 µm to 610 µm). In yet another aspect, the single-ply paperboard substrate 4 has an average caliper thickness in the range of 0.016 inch to 0.022 inch (16 point to 22 point; 406 µm to 559 µm). In yet another aspect, the single-ply paperboard substrate 4 has an average caliper thickness in the range of 0.016 inch to 0.020 inch (16 point to 20 point; 406 µm to 508 µm). In a specific expression, the single-ply paperboard substrate 4 has an average caliper thickness of 0.018 inch (18 point; 457 µm). The high caliper of the single-ply paperboard substrate 4 functions to increase rigidity of the coated paperboard 2 when formed into a paperboard tray to withstand a process of overwrapping the paperboard tray.

In an aspect, the single-ply paperboard substrate 4 may have an uncoated basis weight of at least about 60 pounds per 3000 ft² (98 g/m²). In one expression the single-ply paperboard substrate 4 may have an uncoated basis weight ranging from about 60 pounds per 3000 ft² (98 g/m²) to about 400 pounds per 3000 ft² (650 g/m²). In another expression the single-ply paperboard substrate 4 may have an uncoated basis weight ranging from about 120 pounds per 3000 ft² (196 g/m²) to about 250 pounds per 3000 ft² (407 g/m²). In another expression the single-ply paperboard substrate 4 may have an uncoated basis weight ranging from about 150 pounds per 3000 ft² (245 g/m²) to about 210 pounds per 3000 ft² (342 g/m²). In a specific expression the single-ply paperboard substrate 4 has an uncoated basis weight of about 185 pounds per 3000 ft² (301 g/m²).

In an aspect, the single-ply paperboard substrate 4 has an internal sizing agent incorporated therein. The internal sizing agent may be any chemical or chemicals added, before thermoforming, which exhibit hydrophobicity. The internal sizing agent may be added before the papermaking process, during the papermaking process, after the papermaking process, or combinations thereof. In an example, the internal sizing agent may be added after the papermaking process via a liquid additive system, such as a continuous metering system from CMS Industrial Technologies, LLC, Gainesville, Georgia, United States.

The internal sizing agent may include, for example, alkyl ketene dimer (AKD), dispersed rosin size (DRS), alkyl succinic anhydride (ASA), and combinations thereon. In a specific expression, the internal sizing agent includes 8 to 12 pounds of DRS per ton of paperboard (4 to 6 kilograms of DRS per metric tonne of paperboard) and 1 pound of AKD per ton of paperboard (0.5 kilogram of AKD per metric tonne of paperboard).

When the coated paperboard 2 is formed into a paperboard tray, the barrier coating 10 functions to separate a moist food product carried on the paperboard tray from the single-ply paperboard substrate 4. Thus, the barrier coating 10 is a coating having water- and grease-resistance.

Additionally, the barrier coating 10 is a high stiffness barrier coating having an elastic modulus of at least 1.5 GPa. In an aspect, the barrier coating 10 has an elastic modulus of from 1.5 GPa to 6.0 GPa. In another aspect, the barrier coating 10 has an elastic modulus of from 2.0 GPa to 5.0 GPa. The high stiffness of the barrier coating 10 functions to increase a rigidity of the coated paperboard 2. Thus, when the coated paperboard 2 is formed into a paperboard tray having the barrier coating 10 on the inner side of the paperboard tray, the paperboard tray can be provided with sufficient rigidity to withstand using the paperboard tray in an overwrapping process.

In an aspect, the barrier coating 10 includes polylactic acid (PLA). For example, the barrier coating 10 can be (or can include) one or more of the biopolymer coatings disclosed in Intl. Pat. App. No. PCT/US2016/062136 filed on November 16, 2016, published as WO2017/091392A1, the entire contents of which are incorporated herein by reference. In another aspect, the barrier coating 10 includes polyethylene terephthalate (PET).

In an aspect, the barrier coating 10 has an average thickness of 0.00025 inch (6.3 µm) or more. In another aspect, the barrier coating 10 has an average thickness of 0.00025 to 0.005 inches (6.3 to 127 µm). In yet another aspect, the barrier coating 10 has an average thickness of 0.0005 to 0.003 inches (12.7 to 76 µm). In yet another aspect, the barrier coating 10 has an average thickness of0.00075 to 0.002 inches (19 to 51 µm). In yet another aspect, the barrier coating 10 has an average thickness of 0.001 to 0.00175 inches (25.4 to 44.5 µm). In yet another aspect, the barrier coating 10 has an average thickness of 0.001 to 0.0015 inches (25.4 to 38.1 µm). In yet another aspect, the barrier coating 10 has an average thickness of 0.001 to 0.00125 inches (25.4 to 31.8 µm).

The barrier coating 10 may be applied, for example, by extrusion coating onto the single-ply paperboard substrate.

The coated paperboard 2 as described above may be formed into a paperboard tray.

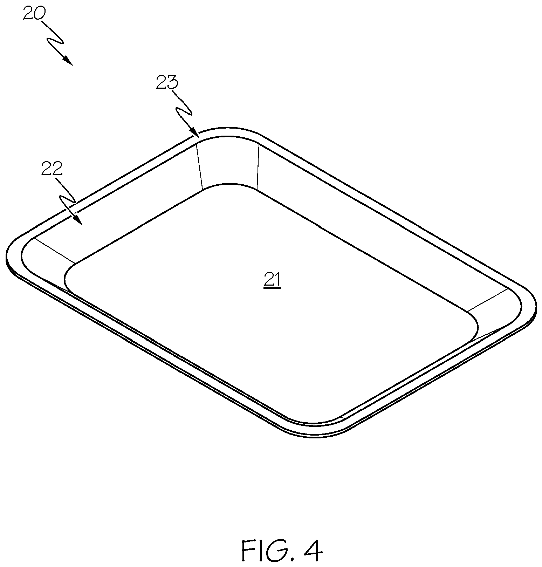

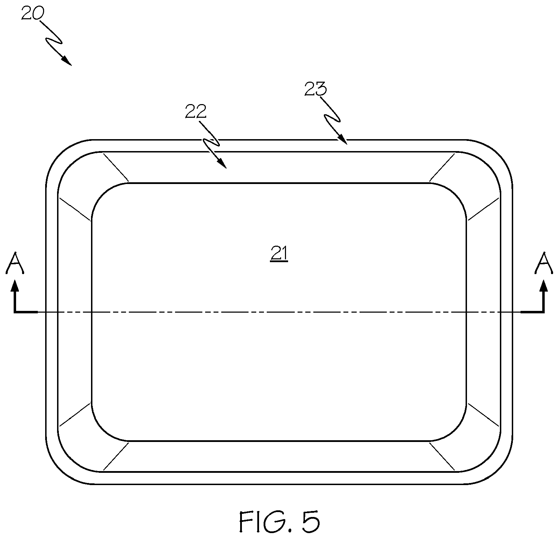

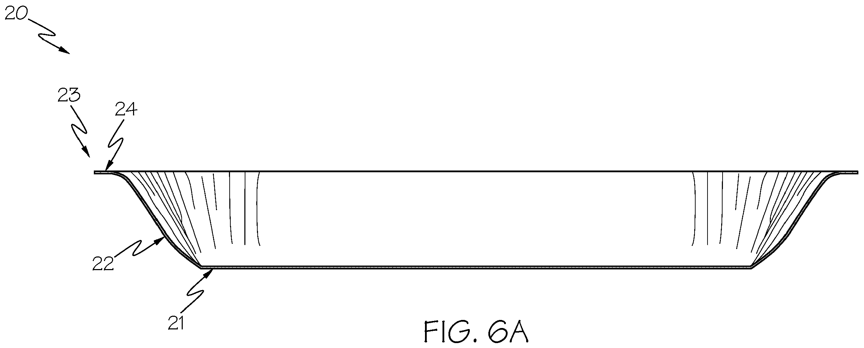

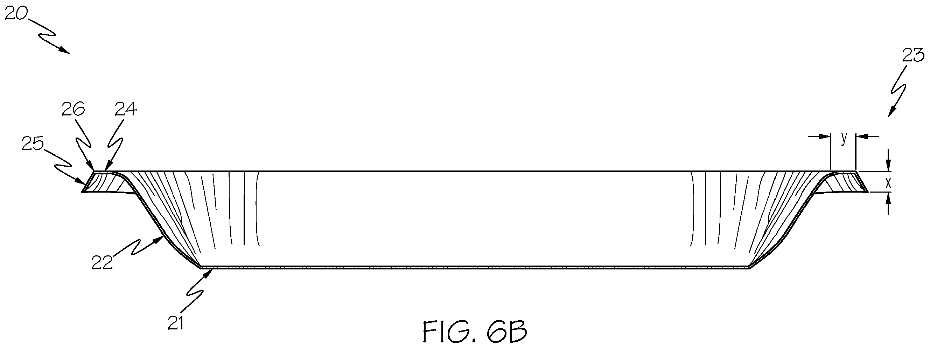

Fig. 4 is a perspective view of an exemplary rectangular paperboard tray 20. Fig. 5 is a top view of the paperboard tray 20 of Fig. 4. Fig. 6A is a side sectional view of the paperboard tray 20 of Fig. 4 along section A-A. Fig. 6B is a side sectional view of the paperboard tray 20 of Fig. 4 according to an alternative variation along section A-A.

Although the paperboard tray 20 is illustrated as having a rectangular shape, the shape is not limited to rectangular and may include any shape, such as circular, square, polygon, or irregular.

In a specific expression, the paperboard tray 20 is rectangular. In an aspect, the length is between 8 and 10 inches (20.3 and 25.4 cm), the width is between 6 and 7 inches (15.2 and 17.8 cm), and the height is between 0.75 and 2 inches (1.9 and 5.1 cm). In a specific expression, the length, width, and height are approximately 8.75 inches, 6.5 inches, and 1.25 inches (22.2 cm, 16.5 cm, and 3.2 cm), respectively. However, it will be understood that the present description is not limited to these specific dimensions and other dimensions and shapes are possible and would be desirable.

As shown, the paperboard tray 20 includes a coated paperboard 2 in the form of a bottom wall 21, a side wall 22 extending upwardly around the bottom wall, and a flange 23 extending outwardly around the side wall 22. As expressed above, the coated paperboard 2 includes the single-ply paperboard substrate 4 having the first major side 6 and the second major side 8 and the barrier coating 10 on the first major side 6 of the single-ply paperboard substrate 4. The first major side 6 of the paperboard substrate 4 corresponds to an upper side of the bottom wall 21. By positioning the high stiffness barrier coating 10 on the upper side of the bottom wall 21, the paperboard tray 20 is provided with water- and grease-resistance desirable for carrying moist food items, and the paperboard tray 20 is provided with sufficient rigidity to withstand using the paperboard tray 20 in an overwrapping process.

Two exemplary embodiments of the flange 23 are shown in Figs. 6A and 6B. In one example, the flange 23 may include any design, including, for example, a horizontal flange 24 as shown in Fig. 6A. In another example, the flange 23 includes, as shown in Fig. 6B, a first flange portion 24 in the form of a horizontal flange and a second flange portion 25 in the form a moveable, downwardly extending flange, in which the first flange portion 24 and second flange portion 25 are coupled by a creased portion 26.

In an aspect, the first flange portion 24 has a length y and the second flange portion 25 has a length x. In an aspect of the present description, a ratio of x/(x+y) is greater than 0 and less than 1/2.

The paperboard tray 20 may be formed by any manufacturing method, such as by a thermoforming method.

According to an aspect of the present description, a method for manufacturing the paperboard tray 20 includes forming a paperboard blank 14 from a coated paperboard 2, in which the coated paperboard 2 includes the single-ply paperboard substrate 4 having the first major side 6 and the second major side 8 and the barrier coating 10 on the first major side of the single-ply paperboard substrate 4. The method further includes thermoforming the paperboard blank 14 into the paperboard tray 20 having the bottom wall 21, the side wall 22 extending upwardly around the bottom wall 21, and the flange 23 extending outwardly around the side wall 22.

The paperboard blank 14 may be formed from a roll 12 of coated paperboard 2. For example, a roll 12 of coated paperboard 2 may be fed to a forming press. The roll 12 may be unwound at the forming press and directed to a cutting section of the forming press where the coated paperboard 2 is cut to the shaped of the paperboard blank 14.

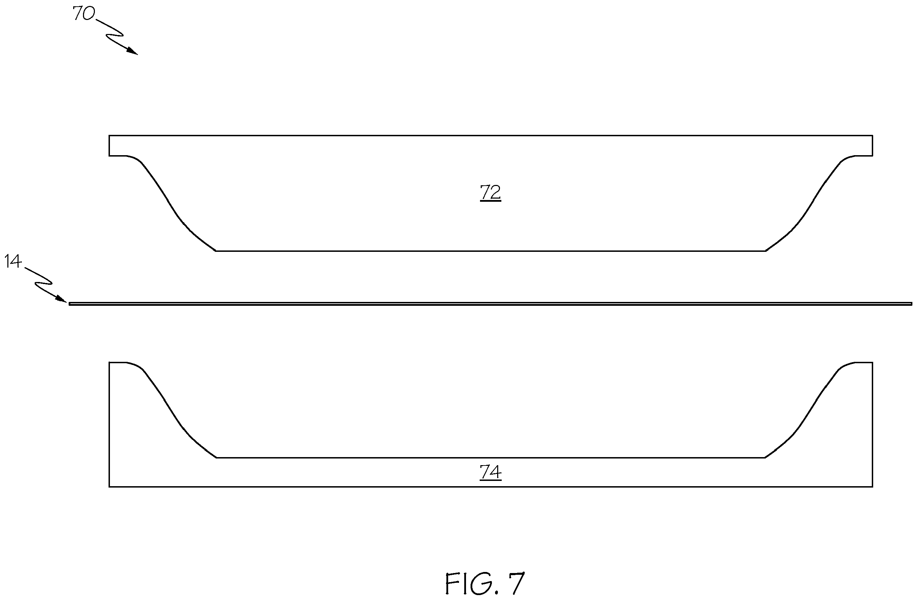

The paperboard blank 14 may then be transported to a thermoforming section of the same (or different) forming press. Fig. 7 is schematic representation of a cross-section of a conventional male die 77 and female die 74 used for thermoforming the paperboard blank 14 into a paperboard tray 20. It will be understood that the male die 77 and the female die 74 as illustrated in Fig. 7 are merely exemplary, and that thermoforming systems may include a variety of modifications and alternatives.

At the thermoforming section 70, the paperboard blank 14 is thermoformed with the male die 72 and the female die 74 using heat and pressure to form a paperboard tray 20. Thus, the paperboard blank 14 is heated, drawn into the temperature-controlled female die 74 by the temperature-controlled male die 72, and then held against the surfaces of the male die 72 and female die 74 until cooled.

The temperature of the female die 74 is controlled to be at a higher temperature than the male die 72. The first major side 6 of the paperboard substrate 4 is arranged to face the male die 72 and the second major side 8 of the paperboard substrate 4 is arranged to face the female die 74. In an aspect, by applying a higher heat with the female die 74 and a lower heat with the male die 72, the barrier coating 10 on the first major side 6 of the paperboard substrate 4 is heated to a lesser amount.

If the temperature of the male die 72 is too low, then the barrier coating 10 as well as the paperboard substrate 4 may be insufficiently heated and the paperboard tray 20 may not be strongly formed to the desired shape. If the temperature of the male die 72 is too high, then the barrier coating 10 may stick to the male die 72. Accordingly, in an aspect, the male die 72 preferably has a temperature of approximately 110-220 °F (43-105 °C). In yet another aspect, the male die may have a temperature of approximately 120-200 °F (49-93 °C). In another aspect, the male die may have a temperature of approximately 120-140 °F (49-60 °C).

In an aspect, the female die may have a temperature of approximately 200-450 °F (93-232 °C). In another aspect, the female die may have a temperature of approximately 250-350 °F (121-177 °C). In yet another aspect, the female die may have a temperature of approximately 300-325 °F (149-163 °C).

The temperature of the male die may depend on the composition of the barrier coating. In a specific example, when the barrier coating includes polylactic acid (PLA), the male die preferably has a temperature of approximately 110-160 °F (43-71 °C), more preferably 120-140 °F (49-60 °C). In another specific example, when the barrier coating includes polyethylene terephthalate (PET), the male die preferably has a temperature of approximately 110-200 °F (43-93 °C), more preferably 120-190 °F (49-88 °C).

In an aspect, a moisture content of the coated paperboard 2 is controlled during the thermoforming process. The moisture content may be controlled by, for example, using a humidifier to control an atmospheric humidity or addition of moisture directly to the coated paperboard.

If the moisture content of the coated paperboard 2 is too high, then blistering of the barrier coating 10 may occur. If the moisture content of the coated paperboard 2 is too low, then corner cracking of the paperboard substrate 4 and barrier coating 10 may occur. In an aspect, the moisture of the coated paperboard 2 is controlled between 9 and 14% by weight. In another aspect, the moisture of the coated paperboard 2 is controlled between 10 and 13% by weight.

Prior to thermoforming, a backside coating may optionally be applied to the substrate. The coating purpose is to prevent purge and other liquids trapped under the tray during overwrapping and throughout shelf-life from being absorbed into the paperboard. Resistance of moisture absorption is critical for maintaining rigidity of the tray during transport and shelf-fife. Once moisture penetrates the paperboard surface, the tray may weaken and potentially fail.

The coating can be applied as either an overprint coating or extrusion. Examples of suitable coatings include aqueous coatings such as acrylic styrenes, PLA, PET, and other polymers. Such a coating has the primary advantage of resisting moisture absorption, but may also provide advantages such as increased rigidity, compostability and recyclability. Such a coating can further act as a release agent during the thermoforming process thereby improving manufacturing speeds and quality of the tray.

According to an aspect of the present description, a method for using the paperboard tray 20 includes positioning a food product within the paperboard tray 20 and wrapping a film 30 over the product and the paperboard tray 20.

In an aspect, the food product may be a moist food product, such as meat, poultry, seafood, and produce, and the food product may be positioned with the paperboard tray 20 manually or by way of an automated process.

The step of wrapping the film 30 over the product and the paperboard tray 20 may including a manual overwrapping process or an automatic overwrapping process using an overwrapping machine.

By way of example, an exemplary overwrapping machine may take a length of heat sealable film from a roll and fold it around a paperboard tray containing a product. The folded film may then be closed to itself by means of a heated sealing device. However, the overwrapping is not so limited. In a variation, overwrapping may include folding a film around the paperboard tray and lightly sealing the film to itself, such as by way of light heating or adhesive. In another variation, overwrapping may include folding a film around the paperboard tray and sealing the film to the paperboard tray, such as by way of heating or adhesive.

In one example, the film may be CRYOVAC^{®} SES-340 oxygen permeable stretch-shrink poultry film. In another example, the film may be formed from a transparent wrapping material, such as CRYOVAC^{®} D-940 Polyolefin Shrink Film Roll- 60 gauge. In a variation, the film may be formed from a non-transparent wrapping material. In another variation, the transparent wrapping material or non-transparent wrapping material may be printable such as to permit printing of graphics and/or text on the film.

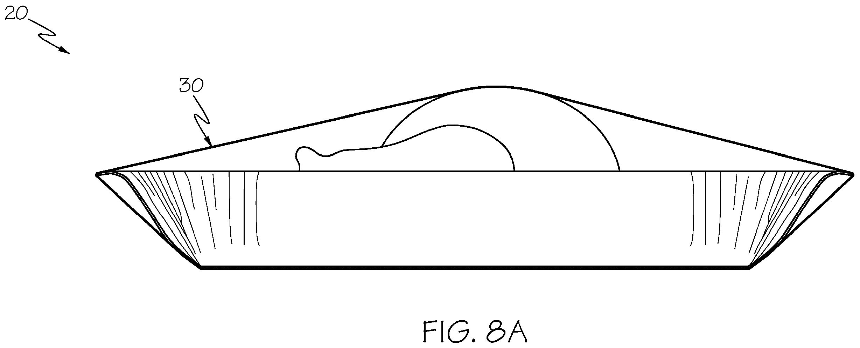

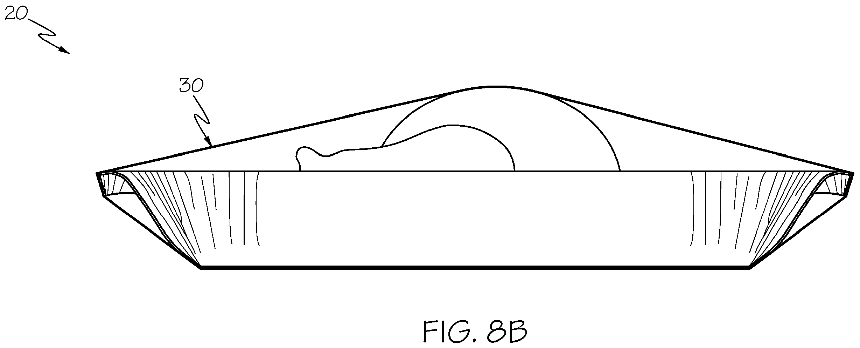

Fig. 8A shows a side sectional view of the paperboard tray 20 of Fig. 6A in a fully wrapped configuration. Fig. 8B shows a side sectional view of the paperboard tray 20 of Fig. 6B in the fully wrapped configuration.

As shown in Fig. 8A, when the paperboard tray 20 is subjected to an overwrapping process, the flange 23 provides strength to the paperboard tray 20 against an inward buckling of the paperboard tray 20. However, the flange 23 may still downwardly deflect due to a force applied by the overwrapped film 30. By positioning the high stiffness barrier coating 10 on a side of a single-ply paperboard substrate 4 that corresponds to an inner side of a paperboard tray 20 formed from the coated paperboard 2, the paperboard tray can be provided with sufficient rigidity to better withstand using the paperboard tray 20 in the overwrapping process.

As shown in Fig. 8B, when the paperboard tray 20 is subjected to an overwrapping process, the second flange portion 25 folds at the creased portion 26 to defect with the force applied by the overwrapped film. By predetermining the origin of the deflection of the second flange portion 25 (i.e. by folding at the creased portion 26), a uniformity of the effect of the overwrapping process on the paperboard tray 20 can be increased. Moreover, during the thermoforming process, the second flange portion 25 can be bent during the thermoforming to the same extent as the bend that will be applied during the overwrapping process. In other words, the second flange portion 25 may be bent during the thermoforming process to up or more than a 90 degrees angle relative to the first flange portion 24 and then unbent to shape illustrated in Fig. 6B. For example, the second flange portion 25 may be bent during the thermoforming process to an angle of between 90-135 degrees relative to the first flange portion 24. Accordingly, by this overbending of the second flange portion 25, then the second flange portion 25 can better withstand using the paperboard tray in the overwrapping process.

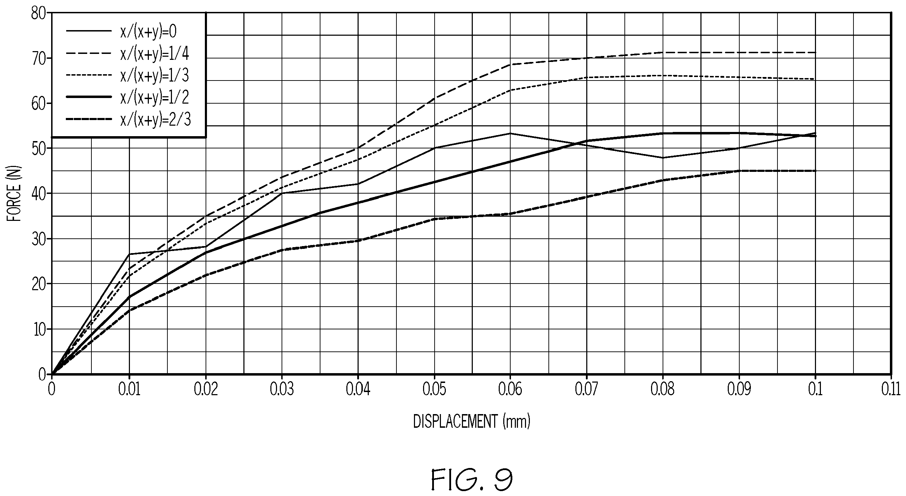

As previously indicated, the first flange portion 24 has a length y and the second flange portion 25 has a length x. In an aspect of the present description, a ratio of x/(x+y) is greater than 0 and less than 1/2. Fig. 9 shows results from a finite element model for optimization of the flange 23 of Fig. 6B, in which the effect of various ratios of x/(x+y) on Force (N) over Displacement (mm) during a simulation of an overwrapping process. As indicated in Fig. 9, improved performance results when a ratio of x/(x+y) is greater than 0 and less than 1/2.

## Claims

1. A coated paperboard comprising:
a single-ply paperboard substrate having a first major side and a second major side, and having an internal sizing agent incorporated therein; and
a barrier coating on the first major side of the single-ply paperboard substrate, the barrier coating having an elastic modulus of at least 1.5 GPa.

2. The coated paperboard of Claim 1 wherein the internal sizing agent includes alkyl ketene dimer (AKD), rosin, alkyl succinic anhydride (ASA), and combinations thereof.

3. The coated paperboard of Claims 1 or 2 wherein the coated paperboard has an average caliper thickness of 0.010 inch (254 µm) or more; or wherein the single-ply paperboard substrate has an average caliper thickness of 0.010 inch (254 µm) or more; and/or wherein the barrier coating has an average thickness of 0.00025 inch (6.3 µm) or more.

4. The coated paperboard of any of Claims 1 to 3 wherein the barrier coating includes polylactic acid; and/or wherein the barrier coating includes polyethylene terephthalate.

5. The coated paperboard of any of Claims 1 to 4 wherein the coated paperboard is compostable; and/or is recyclable.

6. A paperboard tray comprising:
a coated paperboard according to any of claims 1 to 5 in the form of a bottom wall, a side wall extending upwardly around the bottom wall, and a flange extending outwardly around the side wall.

7. The paperboard tray of Claim 6 wherein the coated paperboard has an average caliper thickness of 0.010 inch (254 µm) or more; or wherein the single-ply paperboard substrate has an average caliper thickness of 0.010 inch (254 µm) or more; and/or wherein the barrier coating has an average thickness of 0.00025 inch (6.3 µm) or more.

8. The paperboard tray of any of Claims 6 to 7 wherein the barrier coating includes polylactic acid; and/or polyethylene terephthalate.

9. The paperboard tray of Claim 6 wherein the internal sizing agent includes alkyl ketene dimer (AKD), rosin, alkyl succinic anhydride (ASA), and combinations thereof.

10. The paperboard tray of any of Claims 6 to 9, further comprising a backside coating on the second major side of the single-ply paperboard substrate.

11. The paperboard tray of Claim 10, wherein the backside coating is an aqueous coating including at least one of an acrylic styrene, PLA, and PET.

12. A method for manufacturing the paperboard tray of claim 6, the method comprising:
forming a paperboard blank from a coated paperboard, the coated paperboard comprising:
a single-ply paperboard substrate having a first major side and a second major side; and
a barrier coating on the first major side of the single-ply paperboard substrate, the barrier coating having an elastic modulus of at least 1.5 GPa; and
thermoforming the paperboard blank between a male die and a female die into a paperboard tray having a bottom wall, a side wall extending upwardly around the bottom wall, and a flange extending outwardly around the side wall, the first major side corresponding to an upper side of the bottom wall.

13. The method of Claim 12, wherein the female die is heated to a higher temperature than the male die.

14. The method of Claims 12 or 13, further comprising applying an overprint coating to the second major side of the single-ply paperboard substrate, wherein the overprint coating is applied prior to thermoforming the paperboard blank.

15. The method of Claim 14, wherein the overprint coating is an aqueous coating including at least one of an acrylic styrene, PLA, and PET.

## Patentansprüche

1. Beschichteter Karton, umfassend:
ein einlagiges Kartonsubstrat mit einer ersten Hauptseite und einer zweiten Hauptseite und einem darin eingearbeiteten Innenleimungsmittel; und
eine Sperrbeschichtung auf der ersten Hauptseite des einlagigen Kartonsubstrats, wobei die Sperrbeschichtung einen Elastizitätsmodul von mindestens 1,5 GPa aufweist.

2. Beschichteter Karton nach Anspruch 1, wobei das Innenleimungsmittel Alkylketendimer (AKD), Kolophonium, Alkylbernsteinsäureanhydrid (ASA) und Kombinationen davon beinhaltet.

3. Beschichteter Karton nach Anspruch 1 oder 2, wobei der beschichtete Karton eine durchschnittliche Dicke von 0,010 Inch (254 µm) oder mehr aufweist; oder wobei das einlagige Kartonsubstrat eine durchschnittliche Dicke von 0,010 Inch (254 µm) oder mehr aufweist; und/oder wobei die Sperrbeschichtung eine durchschnittliche Dicke von 0,00025 Inch (6,3 µm) oder mehr aufweist.

4. Beschichteter Karton nach einem der Ansprüche 1 bis 3, wobei die Sperrbeschichtung Polymilchsäure beinhaltet; und/oder wobei die Sperrbeschichtung Polyethylenterephthalat beinhaltet.

5. Beschichteter Karton nach einem der Ansprüche 1 bis 4, wobei der beschichtete Karton kompostierbar ist; und/oder recycelbar ist.

6. Kartonschale, umfassend:
einen beschichteten Karton nach einem der Ansprüche 1 bis 5 in Form einer Bodenwand, einer Seitenwand, die sich nach oben um die Bodenwand erstreckt, und eines Flansches, der sich nach außen um die Seitenwand erstreckt.

7. Kartonschale nach Anspruch 6, wobei der beschichtete Karton eine durchschnittliche Dicke von 0,010 Inch (254 µm) oder mehr aufweist; oder wobei das einlagige Kartonsubstrat eine durchschnittliche Dicke von 0,010 Inch (254 µm) oder mehr aufweist; und/oder wobei die Sperrbeschichtung eine durchschnittliche Dicke von 0,00025 Inch (6,3 µm) oder mehr aufweist.

8. Kartonschale nach einem der Ansprüche 6 bis 7, wobei die Sperrbeschichtung Polymilchsäure; und/oder Polyethylenterephthalat beinhaltet.

9. Kartonschale nach Anspruch 6, wobei das Innenleimungsmittel Alkylketendimer (AKD), Kolophonium, Alkylbernsteinsäureanhydrid (ASA) und Kombinationen davon beinhaltet.

10. Kartonschale nach einem der Ansprüche 6 bis 9, die weiter eine Rückseitenbeschichtung auf der zweiten Hauptseite des einlagigen Kartonsubstrats umfasst.

11. Kartonschale nach Anspruch 10, wobei die Rückseitenbeschichtung eine wässrige Beschichtung ist, die mindestens eines von Acrylstyrol, PLA und PET beinhaltet.

12. Verfahren zur Herstellung der Kartonschale nach Anspruch 6, wobei das Verfahren Folgendes umfasst:
Bilden eines Kartonrohlings aus einem beschichteten Karton, wobei der beschichtete Karton Folgendes umfasst:
ein einlagiges Kartonsubstrat mit einer ersten Hauptseite und einer zweiten Hauptseite; und
eine Sperrbeschichtung auf der ersten Hauptseite des einlagigen Kartonsubstrats, wobei die Sperrbeschichtung einen Elastizitätsmodul von mindestens 1,5 GPa aufweist; und
Thermoformen des Kartonrohlings zwischen einer Patrize und einer Matrize zu einer Kartonschale mit einer Bodenwand, einer Seitenwand, die sich nach oben um die Bodenwand erstreckt, und einem Flansch, der sich nach außen um die Seitenwand erstreckt, wobei die erste Hauptseite einer Oberseite der Bodenwand entspricht.

13. Verfahren nach Anspruch 12, wobei die Matrize auf eine höhere Temperatur als die Patrize erhitzt wird.

14. Verfahren nach Anspruch 12 oder 13, das weiter Auftragen einer Überdruckbeschichtung auf die zweite Hauptseite des einlagigen Kartonsubstrats umfasst, wobei die Überdruckbeschichtung vor dem Thermoformen des Kartonrohlings aufgetragen wird.

15. Verfahren nach Anspruch 14, wobei die Überdruckbeschichtung eine wässrige Beschichtung ist, die mindestens eines von Acrylstyrol, PLA und PET beinhaltet.

## Revendications

1. Carton couché comprenant :
un substrat en carton monocouche ayant une première face principale et une seconde face principale, et ayant un agent de collage interne incorporé dedans ; et
un revêtement barrière sur la première face principale du substrat en carton monocouche, le revêtement barrière ayant un module élastique d'au moins 1,5 GPa.

2. Carton couché selon la revendication 1, dans lequel l'agent de collage interne inclut du dimère d'alkylcétène (AKD), de la colophane, de l'anhydride alkylsuccinique (ASA), et des combinaisons de ceux-ci.

3. Carton couché selon les revendications 1 ou 2, le carton couché ayant une épaisseur de calibre moyenne de 254 µm (0,010 in) ou plus ; ou dans lequel le substrat en carton monocouche a une épaisseur de calibre moyenne de 254 µm (0,010 in) ou plus ; et/ou dans lequel le revêtement barrière a une épaisseur moyenne de 6,3 µm (0,00025 in) ou plus.

4. Carton couché selon n'importe laquelle des revendications 1 à 3, dans lequel le revêtement barrière inclut du polyacide lactique ; et/ou dans lequel le revêtement barrière inclut du polytéréphtalate d'éthylène.

5. Carton couché selon n'importe laquelle des revendication 1 à 4, le carton couché étant compostable ; et/ou étant recyclable.

6. Barquette en carton comprenant :
un carton couché selon n'importe laquelle des revendications 1 à 5 prenant la forme d'une paroi inférieure, d'une paroi latérale s'étendant vers le haut autour de la paroi inférieure, et d'un rebord s'étendant vers l'extérieur autour de la paroi latérale.

7. Barquette en carton selon la revendication 6, dans laquelle le carton couché a une épaisseur de calibre moyenne de 254 µm (0,010 in) ou plus ; ou dans laquelle le substrat en carton monocouche a une épaisseur de calibre moyenne de 254 µm (0,010 in) ou plus ; et/ou dans laquelle le revêtement barrière a une épaisseur moyenne de 6,3 µm (0,00025 in) ou plus.

8. Barquette en carton selon n'importe laquelle des revendications 6 à 7, dans laquelle le revêtement barrière inclut du polyacide lactique ; et/ou du polytéréphtalate d'éthylène.

9. Barquette en carton selon la revendication 6, dans laquelle l'agent de collage interne inclut du dimère d'alkylcétène (AKD), de la colophane, de l'anhydride alkylsuccinique (ASA), et des combinaisons de ceux-ci.

10. Barquette en carton selon n'importe laquelle des revendications 6 à 9, comprenant en outre un revêtement dorsal sur la seconde face principale du substrat en carton monocouche.

11. Barquette en carton selon la revendication 10, dans laquelle le revêtement dorsal est un revêtement aqueux incluant au moins un élément parmi un styrène acrylique, du PLA et du PET.

12. Procédé de fabrication de la barquette en carton selon la revendication 6, le procédé comprenant :
la formation d'une découpe en carton à partir d'un carton couché, le carton couché comprenant :
un substrat en carton monocouche ayant une première face principale et une seconde face principale ; et
un revêtement barrière sur la première face principale du substrat en carton monocouche, le revêtement barrière ayant un module élastique d'au moins 1,5 GPa ; et
le thermoformage de la découpe en carton entre un moule mâle et un moule femelle en une barquette en carton ayant une paroi inférieure, une paroi latérale s'étendant vers le haut autour de la paroi inférieure, et un rebord s'étendant vers l'extérieur autour de la paroi latérale, la première face principale correspondant à une face supérieure de la paroi inférieure.

13. Procédé selon la revendication 12, dans lequel le moule femelle est chauffé à une plus haute température que le moule mâle.

14. Procédé selon les revendications 12 ou 13, comprenant en outre l'application d'un revêtement de surimpression sur la seconde face principale du substrat en carton monocouche, le revêtement de surimpression étant appliqué préalablement au thermoformage de la découpe en carton.

15. Procédé selon la revendication 14, dans lequel le revêtement de surimpression est un revêtement aqueux incluant au moins un élément parmi un styrène acrylique, du PLA et du PET.
